(19) Europäisches Patentamt
European Patent Office
Office européen des brevets

(11) **EP 3 978 965 A1**

(12) **EUROPEAN PATENT APPLICATION**
published in accordance with Art. 153(4) EPC

(43) Date of publication:
**06.04.2022 Bulletin 2022/14**

(21) Application number: **20813904.8**

(22) Date of filing: **18.05.2020**

(51) International Patent Classification (IPC):
**G02B 5/18** (2006.01)        **G01J 3/18** (2006.01)

(52) Cooperative Patent Classification (CPC):
**G01J 3/18; G02B 5/18**

(86) International application number:
**PCT/JP2020/019576**

(87) International publication number:
**WO 2020/241334 (03.12.2020 Gazette 2020/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.05.2019 JP 2019103137**

(71) Applicant: **Sony Group Corporation**
**Tokyo 108-0075 (JP)**

(72) Inventors:
• **ZHUANG, Tuo**
  **Tokyo 108-0075 (JP)**
• **TROLL, Guenter**
  **70327 Stuttgart (DE)**
• **GATTO, Alexander**
  **70327 Stuttgart (DE)**

(74) Representative: **D Young & Co LLP**
**120 Holborn**
**London EC1N 2DY (GB)**

(54) **DIFFRACTION ELEMENT AND IMAGING DEVICE**

(57)    An imaging region of an image sensor is used more efficiently. A diffraction element (100) according to the embodiment includes a grating pattern, in which according to a position of light input to the diffraction element, the position being from a center of the diffraction element, an image forming position of diffracted light corresponding to the position of each wavelength is adjusted by adjusting a shape of the grating pattern at the position

## FIG.24

**Description**

Field

The present disclosure relates to a diffraction element and an imaging device.

Background

In the related art, a spectroscopic measurement method is known as a method for analyzing a composition of an object. The spectroscopic measurement method is a method for analyzing a composition (element, a molecular structure, and the like) of an object by analyzing radiation light, reflection light, or transmission light from the object.

A light wavelength component of the radiation light, the reflection light, or the transmission light from the object varies depending on the composition of the object. Accordingly, the composition of the object can be analyzed by analyzing the wavelength component. In general, data indicating an amount of each wavelength is referred to as a wavelength spectrum, and processing of measuring the wavelength spectrum is referred to as spectroscopic measurement processing.

In order to analyze the composition of each point on a surface of the object, it is necessary to acquire correspondence data between spatial information and wavelength information of the object. A snapshot method is known as a method for acquiring the correspondence data between the spatial information and the wavelength information of the object by only one processing of the correspondence data between the spatial information and the wavelength information of the object, that is, only one time of imaging processing of the spectroscopic measurement device. The spectroscopic measurement device to which the snapshot method is applied includes a combination of an optical system including a plurality of lenses, a slit (visual field stop), a spectroscopic element, and the like, and a sensor. Spatial resolution and wavelength resolution of the spectroscopic measurement device are determined by the configurations of the optical system and sensor.

Citation List

Patent Literature

Patent Literature 1: JP 2016-90576 A

Non Patent Literature

Non Patent Literature 1: Habel, R., Kudenov, M., Wimmer, M.: Practical spectral photography. Computer Graphics Forum (Proceedings EUROGRAPHICS 2012) 31 (2), 449-458 (2012)

Non Patent Literature 2: Tebow, Christopher P.; Dereniak, Eustace L.; Garrood, Dennis; Dorschner, Terry A.; Volin, Curtis E.: Tunable snapshot imaging spectrometer. Proceedings of the SPIE, Volume 5159, p. 64-72 (2004)

Non Patent Literature 3: Dwight JG, Tkaczyk TS.: Lenslet array tunable snapshot imaging spectrometer (LATIS) for hyperspectral fluorescence microscopy. Biomed Opt Express. 2017;8: 1950-64

Summary

Technical Problem

Here, a spectroscopic element such as a prism or a diffraction grating generally used in a spectroscopic measurement device disperses incident light in one axis direction or two axis directions according to a wavelength thereof. On the other hand, an imaging region of an image sensor for capturing the spectroscopic image is usually a rectangular region. This means that the image sensor has many imaging regions in which a spectroscopic image is not incident.

As described above, in a general spectroscopic element of the related art, it is difficult to efficiently use the imaging region of the image sensor used in the spectroscopic measurement device or the like.

According to this, the present disclosure provides a diffraction element and an imaging device in which the imaging region of the image sensor is more efficient used.

Solution to Problem

To solve the above-described problem, a diffraction element according to one aspect of the present disclosure comprises a grating pattern, wherein according to a position of light input to the diffraction element, the position being from a center of the diffraction element, an image forming position of diffracted light corresponding to the position of each wavelength is adjusted by adjusting a shape of the grating pattern at the position.

Brief Description of Drawings

FIG. 1 is a diagram illustrating a relationship between a type of light and a type of a wavelength.

FIG. 2 is a diagram illustrating an example of spectroscopic measurement of a light emitting object.

FIG. 3 is a diagram illustrating an example of a result of spectrum intensity analysis, the result being a result of spectroscopic analysis of output light of a certain food product.

FIG. 4 is a diagram illustrating a prism which is a spectroscopic element.

FIG. 5 is a diagram illustrating a diffraction grating which is a spectroscopic element.

FIG. 6 is a diagram illustrating an example of a data cube which is three-dimensional data including spatial directions (XY) and a wavelength direction (λ) of a measurement object.

FIG. 7 is a diagram illustrating a schematic configuration example of a point measurement type (spectrometer) spectroscopic measurement device.

FIG. 8 is a diagram illustrating an example of data acquired by one time of imaging processing by using a point measurement type spectroscopic measurement device.

FIG. 9 is a diagram illustrating a schematic configuration example of a wavelength scanning type spectroscopic measurement device.

FIG. 10 is a diagram illustrating an example of data acquired by one time of imaging processing by using a wavelength scanning type spectroscopic measurement device.

FIG. 11 is a diagram illustrating a schematic configuration example of a space scanning type spectroscopic measurement device.

FIG. 12 is a diagram illustrating an example of data acquired by one time of imaging processing by using a space scanning type spectroscopic measurement device.

FIG. 13 is a diagram illustrating a schematic configuration example of a snapshot type spectroscopic measurement device.

FIG. 14 is a diagram illustrating an example of data acquired by one time of imaging processing by using a snapshot type spectroscopic measurement device.

FIG. 15 is a diagram illustrating a modified example of a snapshot type spectroscopic measurement device.

FIG. 16 is a diagram illustrating a restoration method of a data cube in a snapshot type.

FIG. 17 is a diagram illustrating a principle of spectral diffraction by a slit-type diffraction grating.

FIG. 18 is a diagram illustrating an example of an image of light spectrally diffracted by a grating type diffraction grating.

FIG. 19 is a diagram illustrating a relationship between a wavelength of incident light and a diffraction angle.

FIG. 20 is a diagram illustrating a problem of a snapshot type (part 1).

FIG. 21 is a diagram illustrating a problem of a snapshot type (part 2).

FIG. 22 is a diagram illustrating a first problem in a method for adjusting wavelength resolution and spatial resolution by controlling a grating interval.

FIG. 23 is a diagram illustrating a second problem in a method for adjusting wavelength resolution and spatial resolution by controlling a grating interval.

FIG. 24 is a top view illustrating an example of a basic diffraction grating and a diffraction grating according to a first embodiment.

FIG. 25 is a diagram illustrating an example of each of image data captured by using the diffraction grating illustrated in a left side of FIG. 24 and image data captured by using a diffraction grating according to a first embodiment, which is illustrated in a right side of FIG. 24.

FIG. 26 is a diagram illustrating a method for designing the diffraction grating illustrated in the left side of FIG. 24.

FIG. 27 is a diagram illustrating a method for designing a diffraction grating according to a first embodiment.

FIG. 28 is a flowchart illustrating a design procedure of a diffraction grating according to a first embodiment.

FIG. 29 is a diagram illustrating a specific example of a procedure described in Step S101 of FIG. 28.

FIG. 30 is a diagram illustrating a specific example of a procedure described in Step S102 of FIG. 28.

FIG. 31 is a diagram illustrating a specific example of a procedure described in Step S103 of FIG. 28.

FIG. 32 is a diagram illustrating a specific example of a procedure described in Step S104 of FIG. 28.

FIG. 33 is a diagram illustrating a relationship between the diffraction grating illustrated in the left side of FIG. 24 and a diffraction image.

FIG. 34 is a diagram illustrating a relationship between a diffraction grating according to a first embodiment and a diffraction image.

FIG. 35 is a diagram illustrating a data cube of light used as incident light in simulation.

FIG. 36 is a diagram illustrating a restoration result of a wavelength spectrum in a case where the diffraction grating illustrated in the left side of FIG. 24 is used.

FIG. 37 is a diagram illustrating a restoration result of a wavelength spectrum in a case where a diffraction grating according to a first embodiment is used.

FIG. 38 is a plan view illustrating an example (example of CHECKER pattern) of a diffraction grating as a base in a second embodiment.

FIG. 39 is a plan view illustrating a diffraction grating according to a first variation example of a second embodiment, which is generated based on the diffraction grating illustrated in FIG. 38.

FIG. 40 is a plan view illustrating another example (example of COSINE pattern) of a diffraction grating as a base in a second embodiment.

FIG. 41 is a plan view illustrating a diffraction grating according to a second variation example of a second embodiment, which is generated based on the diffraction grating illustrated in FIG. 40.

Description of Embodiments

Embodiments of the present disclosure will be described in detail below with reference to the drawings. Note that, in the following embodiments, the same parts are denoted by the same reference numerals, and an overlapped description will be omitted.

Furthermore, the present disclosure will be described according to an order of items to be described below.

1. Regarding Outline of Spectroscopic Measurement Device (System)
2. Regarding Problem of Snapshot Type
3. First Embodiment

    3.1 Outline of Diffraction Grating
    3.2 Design of Diffraction Grating
    3.3 More Specific Design Procedure
    3.4 Relationship between Diffraction Grating and Diffraction Image
    3.5 Simulation Result
    3.6 Action and Effect

4. Second Embodiment

    4.1 First Variation
    4.2 Second variation

1. Regarding Outline of Spectroscopic Measurement Device (System)

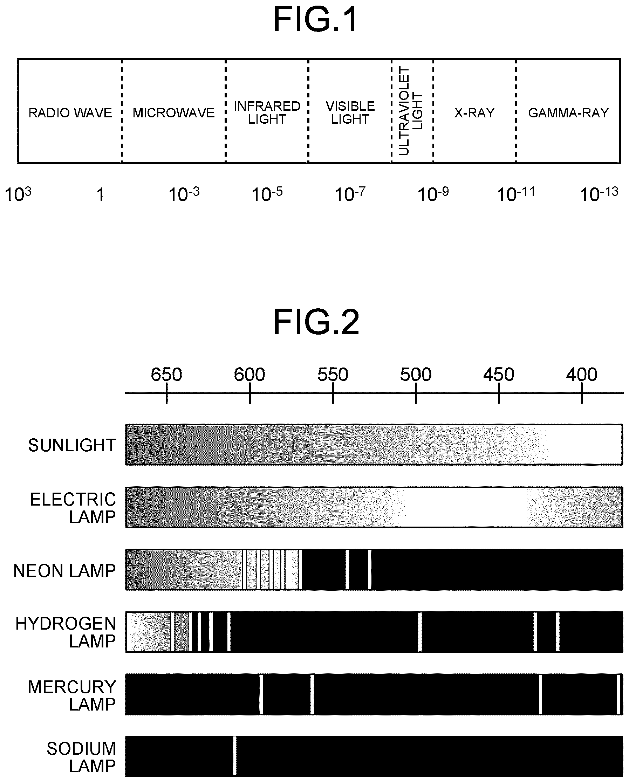

First, an outline of a spectroscopic measurement device (system) will be described. As light, for example, infrared light, visible light, ultraviolet light, and the like are known, but each of these light beams is a kind of electromagnetic wave, and has a wavelength (vibration period) varying depending on the type of light as illustrated in FIG. 1.

A wavelength of the visible light ranges from about 400 nm to 700 nm, and the infrared light has characteristics that a wavelength thereof is longer than that of the visible light, and the ultraviolet light has characteristics that a wavelength thereof is shorter than that of the visible light.

As described above, a light wavelength component of radiation light, reflection light, or transmission light from an object varies depending on the composition (element, molecular structure, and the like) of the object, and the composition of the object can be analyzed by analyzing the wavelength component. In general, data indicating an amount of each wavelength is referred to as a wavelength spectrum, and processing of measuring the wavelength spectrum is referred to as spectroscopic measurement processing.

FIG. 2 is a diagram illustrating a spectroscopic measurement example of a light emitting object. FIG. 2 illustrates that light output from the Sun, an electric lamp, a neon lamp, a hydrogen lamp, a mercury lamp, and a sodium lamp is which wavelength of light in a wavelength range of the visible light (about 400 nm to 700 nm). A region in which the light is output is displayed in white, and a region in which the light is not output is displayed in black. FIG. 2 illustrates a result obtained by performing a spectroscopic measurement on the light output from sunlight, electric lamp, and various heated substances.

As illustrated in FIG. 2, the sun, the electric lamp, the neon lamp, the hydrogen lamp, the mercury lamp, the sodium lamp, and each of these objects output the light having a unique wavelength respectively. That is, even when the object is unknown, the composition of the object can be analyzed by analyzing the wavelength component contained in the light from the object.

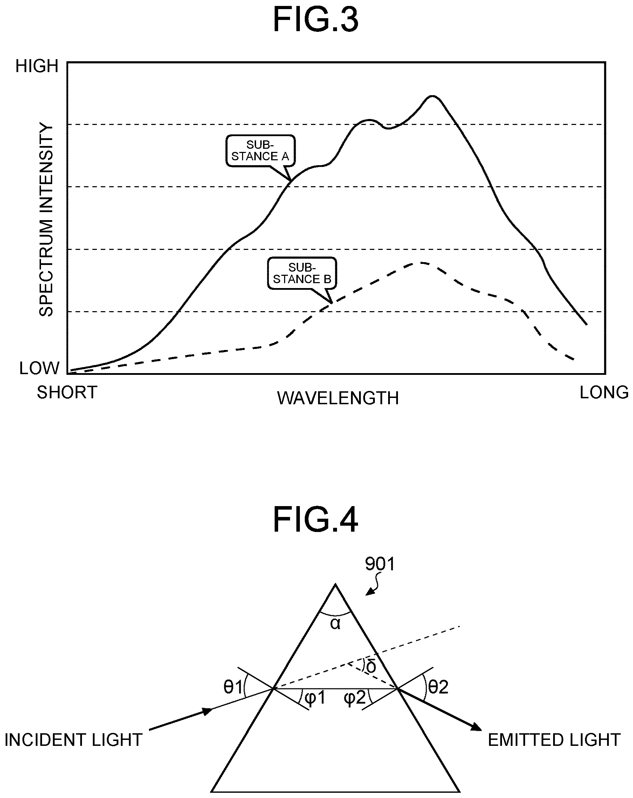

For example, in a case where a composition of a certain processed food product is unknown, it is possible to analyze a substance constituting the food product by analyzing output light (radiation light, reflection light, or transmission light) of the food product. FIG. 3 is a diagram illustrating an example of a result of spectrum intensity analysis, the result being a result of spectroscopic analysis of output light of a certain food product. Two different spectral analysis results have been obtained from this food product.

By comparing a result of this spectrum intensity analysis with spectral intensity analysis result data obtained by analyzing various substances in advance, it is possible to determine what a substance A and a substance B are, and it is possible to analyze the composition of the food product.

As described above, when the spectroscopic measurement can be performed, various information regarding the measurement object can be acquired. However, in a general camera having a condenser lens and a sensor, light in which all wavelengths are mixed is incident on each pixel of the sensor, and thus it is difficult to analyze the intensity of each wavelength unit.

Therefore, an observation system of the spectroscopic measurement is provided with a spectroscopic element (spectroscopic device) for separating light of each wavelength from light coming into the camera.

As the most commonly known spectroscopic element, there is a prism 901 illustrated in FIG. 4. Light incident on the prism 901, that is, light of various wavelengths included in the incident light is emitted from the prism 901 at an emission angle corresponding to the wavelength of the incident light, an incident angle, and a shape of the prism 901. The observation system of the spectroscopic measurement is provided with a spectroscopic element such as the prism 901, and has a configuration in which light in a unit of wavelength can be individually received by the sensor.

Note that, in the spectral diffraction by the prism having a refractive index n, an equation indicating a change in a traveling direction of the light due to the prism can be expressed by Equation (1) below.

$$\delta = \theta_1 - \phi_1 + \theta_2 - \phi_2 = \theta_1 + \theta_2 - \alpha \qquad (1)$$

Note that, each parameter of Equation (1) is as follows.

$\alpha$: apex angle of prism
$\theta_1$: incident angle with respect to incident plane of prism
$\theta_2$: emission angle with respect to emission plane of prism
$\phi_1$: refraction angle of incident plane of prism
$\phi_2$: refraction angle of emission plane of prism
$\delta$: deflection angle (angle between incident light and emitted light)

Here, according to Snell's law ($\sin\theta_j = n\sin\Phi_j$), Equation (1) can be replaced with Equation (2) below.

$$\delta = \theta_1 + sin^{-1}\left(n \cdot sin(\alpha - \phi_1)\right) \qquad (2)$$

Note that, in Equation (2), n is a refractive index of the prism, and the refractive index n depends on the wavelength. Furthermore, $\phi_1$ is a refraction angle of the incident plane of the prism, and depends on the refractive index n of the prism and an incident angle $\theta_1$ with respect to the incident plane of the prism. Accordingly, a deflection angle $\delta$ (angle between the incident light and the emitted light) depends on the incident angle $\theta_1$ and the wavelength.

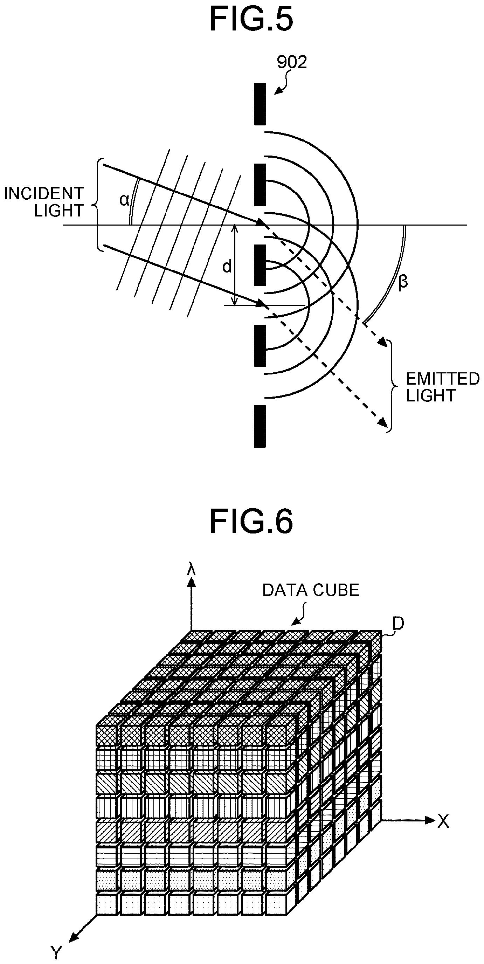

Furthermore, as illustrated in FIG. 5, spectral diffraction can be performed by a diffraction grating 902 using a property of a wave of light. An emission angle (diffraction angle) $\beta$ of the light beam in accordance with the diffraction grating 902 can be expressed by Equation (3) below.

$$\beta = sin^{-1}\left(\frac{m \cdot \lambda}{d} - sin\,\alpha\right) \qquad (3)$$

Note that, in Equation (3), d is a grating interval, $\alpha$ is an incident angle, $\beta$ is an emission angle, and m is a diffraction order.

However, even when the wavelength information of the light from a certain point of the object is analyzed, only the composition of the point thereof can be analyzed. That is, in order to analyze the composition of each point on the surface of the object by one time of the observation, it is necessary to analyze all the light from each point on the surface of the object.

In order to analyze the composition of each point on the surface of the measurement object, it is necessary to acquire three-dimensional data including the spatial directions (XY) and the wavelength direction ($\lambda$) of the measurement object by one time of the observation. FIG. 6 illustrates an example of three-dimensional data including the spatial directions (XY) and the wavelength direction ($\lambda$) of the measurement object, that is, a data cube.

As illustrated in FIG. 6, the data cube is three dimensional data including the spatial directions (XY) and the wavelength direction ($\lambda$) of the measurement object, the data in which a coordinate of each point on the surface of the measurement object is indicated by XY coordinate, and intensity ($\lambda$) of each wavelength light at each coordinate position (x, y) is recorded. The data cube illustrated in FIG. 6 is configured of $8 \times 8 \times 8$ cube data, and one cube D is data indicating light intensity of a specific wavelength ($\lambda$) at a specific position (x, y).

Note that, the number $8 \times 8 \times 8$ of the cube illustrated in FIG. 6 is an example, and this number varies depending on the spatial resolution and wavelength resolution of the spectroscopic measurement device.

Next, an example of an existing spectroscopic measurement device that acquires the data cube illustrated in FIG. 6, that is, three-dimensional data including the spatial directions (XY) and the wavelength direction ($\lambda$) of the measurement object, will be described.

The existing spectroscopic measurement devices that acquire three-dimensional data including the spatial directions (XY) and the wavelength direction ($\lambda$) of the measurement object are classified into the following four types.

(a) Point measurement type (Spectrometer)
(b) Wavelength scanning type
(c) Space scanning type
(d) Snapshot type

Hereinafter, an outline of each of these types will be described.

(a) Point measurement type (Spectrometer)

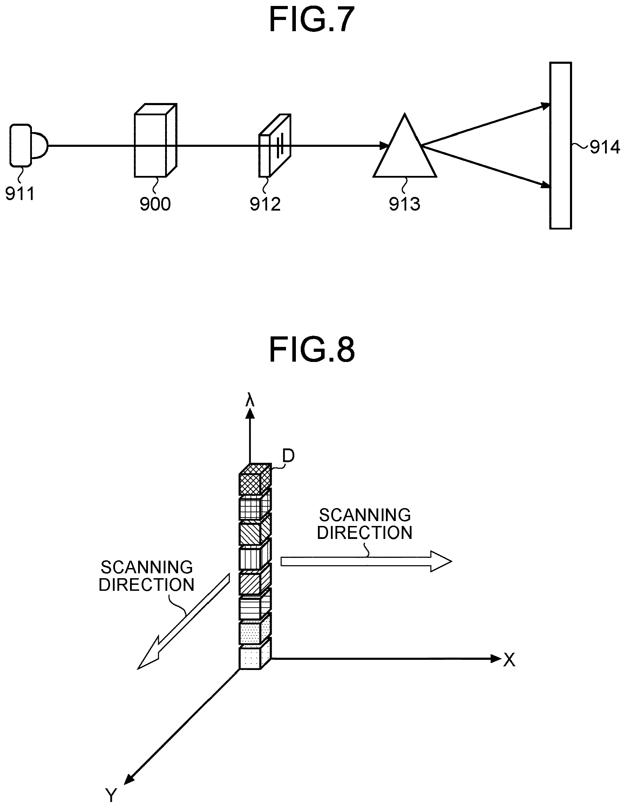

FIG. 7 is a diagram illustrating a schematic configuration example of the point measurement type (spectrometer) spectroscopic measurement device, and FIG. 8 is a diagram illustrating an example of data acquired by one time of imaging processing by using the point measurement type spectroscopic measurement device.

As illustrated in FIG. 7, the point measurement type spectroscopic measurement device includes a light source 911, a slit 912, a prism 913, and a linear sensor 914, and has a configuration in which light emitted from one point of a measurement object 900 is spectrally diffracted by the prism 913 which is the spectroscopic element and the dispersed light is projected on the linear sensor 914 in which elements are arranged only in one direction. In such a configuration, different wavelength light is recorded in a different element (pixel) of the linear sensor 914.

In the point measurement type, the wavelength spectrum is acquired by reading a value of each element (pixel) of the linear sensor 914. A feature of this point measurement type is that the wavelength resolution depends on an element size (the number of pixels) of the linear sensor 914, and a detailed wavelength information can be acquired as the number of elements (the number of pixels) increases.

However, in the point measurement type, light emitted from one point of the measurement object 900 is received and analyzed in one time of the imaging processing. Therefore, as illustrated in FIG. 8, only the wavelength information ($\lambda$) of only a certain one point of the spatial directions (XY) of the measurement object 900 can be obtained in one time of the imaging processing. Therefore, in order to obtain the wavelength information ($\lambda$) of various points of the spatial directions (XY) of the measurement object 900, it is necessary to perform imaging and analysis several times while shifting the measurement position.

(b) Wavelength scanning type

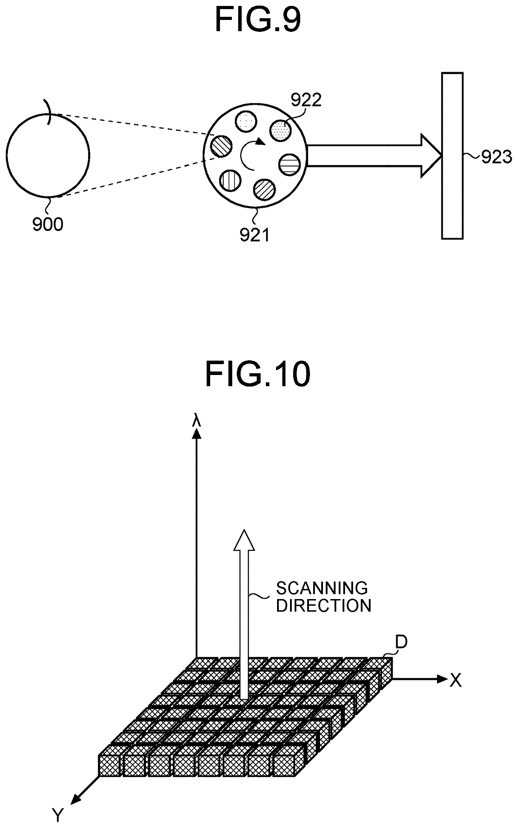

FIG. 9 is a diagram illustrating a schematic configuration example of the wavelength scanning type spectroscopic measurement device, and FIG. 10 is a diagram illustrating an example of data acquired by one time of imaging processing by using the wavelength scanning type spectroscopic measurement device.

As illustrated in FIG. 9, the wavelength scanning type spectroscopic measurement device includes a wavelength filter array 921 and an area sensor (two-dimensional image sensor) 923, and performs imaging by switching a plurality of optical filters 922 which is disposed in front of the area sensor 923 and have different wavelength passing properties every hour.

According to such a procedure, as illustrated in FIG. 10, it is possible to acquire intensity information of one wavelength corresponding to a plurality of spatial positions in one time of imaging. Then, it is possible to acquire intensity information of a plurality of different wavelengths by switching the optical filters 922 to perform imaging.

However, in order to realize high wavelength resolution, it is necessary to prepare a large number of different optical filters 922 and switch the optical filters 922 to perform imaging. Therefore, there is a problem that the measurement time becomes long. Furthermore, there is also a problem that there is a wavelength band that cannot be acquired due to the characteristics of the optical filters 922.

(c) Space scanning type

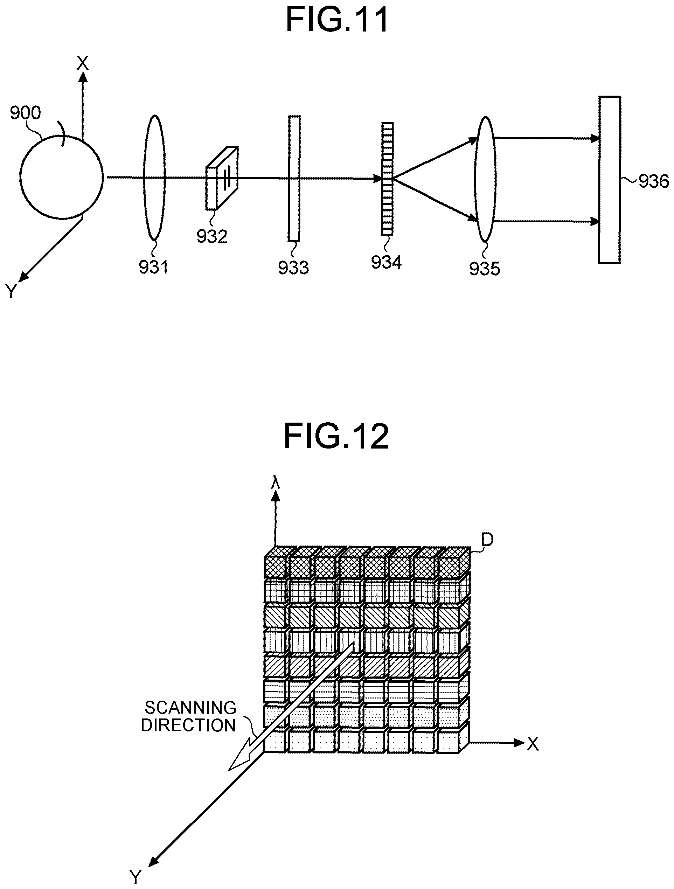

FIG. 11 is a diagram illustrating a schematic configuration example of the space scanning type spectroscopic measurement device, and FIG. 12 is a diagram illustrating an example of data acquired by one time of imaging processing by using the space scanning type spectroscopic measurement device.

As illustrated in FIG. 11, the space scanning type spectroscopic measurement device includes an object lens 931, a slit 932, a collimating lens 933, a spectroscopic element 934, an image forming lens 935, and an area sensor 936, and records one direction of a space as an X direction of the area sensor and a wavelength direction as a Y direction of the area sensor with respect to light from the measurement object 900, the light being spectrally diffracted by the spectroscopic element 934 (prism, diffraction grating, and the like). Moreover, as illustrated in FIG. 12, the spectroscopic measurement device scans the measurement object 900 in the remaining one direction. In this processing, the data cube described above with reference to FIG. 6, that is, the three-dimensional data cube including the spatial directions (XY) and the wavelength direction ($\lambda$) of the measurement object 900 can be acquired.

In this space scanning type, the high spatial resolution and the wavelength resolution can be realized, but there is a problem that a large device is required for scanning, a scan processing time is required, and a measurement time becomes long.

(d) Snapshot type

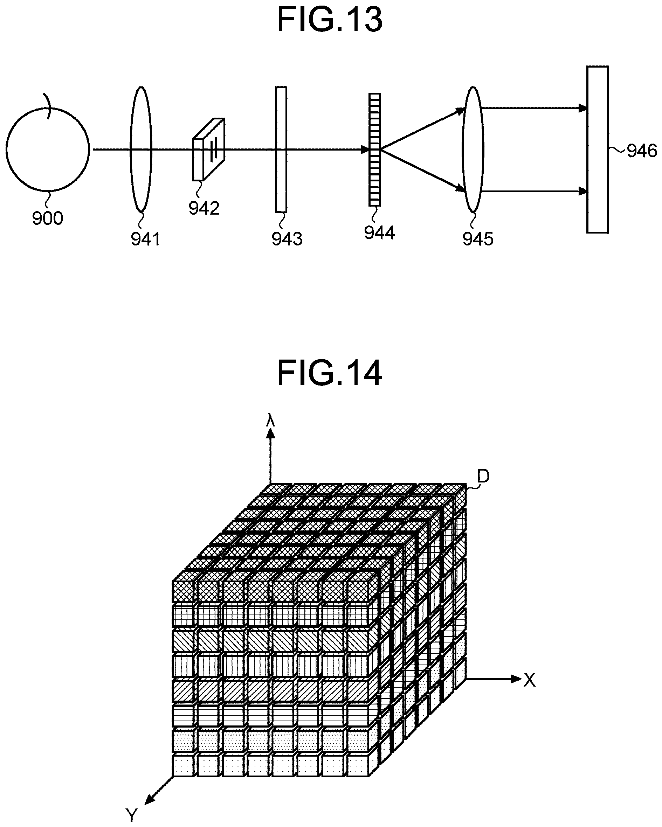

FIG. 13 is a diagram illustrating a schematic configuration example of the snapshot type spectroscopic measurement device, and FIG. 14 is a diagram illustrating an example of data acquired by one time of imaging processing by using the snapshot type spectroscopic measurement device.

As illustrated in FIG. 13, the snapshot type spectroscopic measurement device includes an object lens 941, a slit 942, a collimating lens 943, a diffraction grating type spectroscopic element (hereinafter, simply referred to as a diffraction grating.) 944, an image forming lens 945, and an area sensor 946, and has a configuration in which light from the measurement object 900 is condensed by the object lens 941, converted into parallel light by the collimating lens 943, and transmitted through the diffraction grating 944 to be projected on a light receiving surface of the area sensor 946. Note that, the light receiving surface may be a surface on which photoelectric conversion units such as photodiodes in the image sensor (also referred to as a solid-state imaging device) are arranged.

In such a configuration, light of different wavelength components from different points on the measurement object 900 is recorded in different elements (pixels) on the light receiving surface of the area sensor 946.

In this snapshot type, the data cube described with reference to FIG. 6, that is, the three-dimensional data cube including the spatial directions (XY) and the wavelength direction ($\lambda$) of the measurement object 900 as illustrated in FIG. 14 can be acquired in one time of imaging.

However, since a light receiving area of the area sensor 946 is finite and the information of the wavelength direction is superimposed on the light receiving surface and recorded, it is necessary to perform processing of restoring the data cube by performing signal processing after the imaging.

Furthermore, since various coefficients used for the signal processing are linked with performance of the optical system, it is necessary to fix the optical system, that is, to fix the positional relationship between the sensor and the optical system to use the coefficients, and there is a problem that it is difficult to adjust the wavelength and the spatial resolution according to the application purpose.

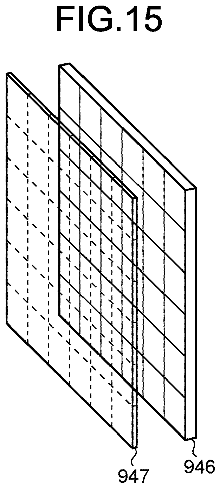

Note that, as an application example of the snapshot type illustrated in FIG. 13, a configuration is proposed in which the data cube is acquired by disposing an optical filter 947 having a different transmission band spatially on the light receiving surface of the area sensor 946 as illustrated in FIG. 15. However, since a light receiving area is finite and it is necessary to mount the optical filter 947 on the light receiving surface of the area sensor 946, there is a problem that the spatial resolution of the area sensor 946 decreases due to the mounting of the optical filter 947.

With reference to FIGS. 7 to 14, the example of the existing spectroscopic measurement device that acquires three-dimensional data including the spatial directions (XY) and the wavelength direction ($\lambda$) of the measurement object, that is, four types of (a) Point measurement type (spectrometer), (b) Wavelength scanning type, (c) Space scanning type, and (d) Snapshot type have been described.

Among these four types, particularly in (d) Snapshot type described with reference to FIGS. 13 and 14, the data cube can be acquired in one time of the imaging. Therefore the snapshot type is highly useful.

Moreover, in order to solve the problem that the adjustment of the wavelength resolution is difficult, a configuration using a diffraction grating that can be incorporated into the existing optical system from a rear side is more suitable than a sensor configuration in which the sensor and the filter are integrated.

In the present disclosure, the snapshot type spectroscopic measurement device using the diffraction grating, for example, a spectroscopic measurement device using a computed tomography imaging spectrometer (CTIS) will be described below with some examples.

2. Regarding Problem of Snapshot Type

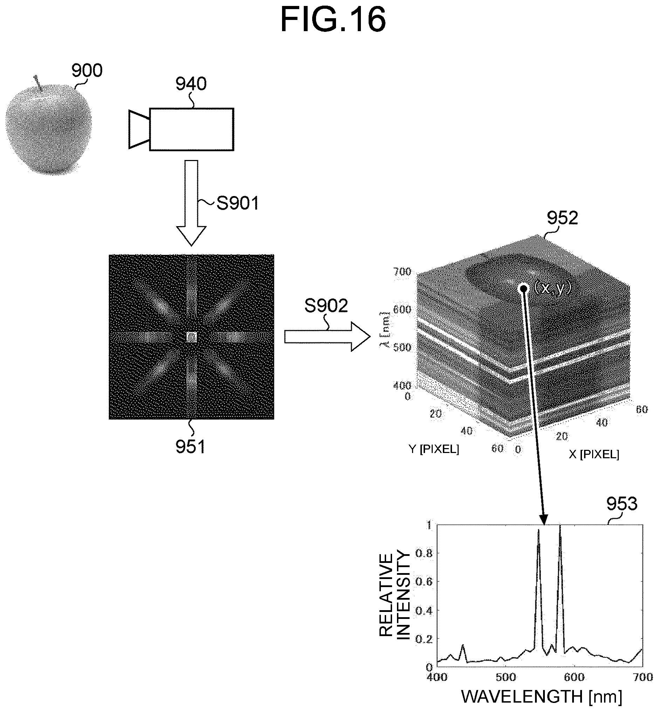

Here, a method for restoring the data cube in the snapshot type will be described with reference to FIG. 16.

FIG. 16 illustrates a case where the measurement object 900 is imaged by a snapshot type spectroscopic measurement device 940 including the lattice-shaped diffraction grating 944 (see FIG. 13).

As illustrated in FIG. 16, in a case where the measurement object 900 is imaged by the spectroscopic measurement device 940 including the diffraction grating 944 (S901), a diffraction image of $\pm$ one order or more is projected in total eight directions of up, down, right, and left directions and oblique directions around a diffraction image of zero order light positioned at a center in a captured image 951.

By performing binary matrix operation processing using a modulation matrix H prepared in advance on such a captured image 951, it is possible to restore a data cube g. Specifically, the data cube g can be restored by substituting the acquired captured image 951 into Equation (4) below. Note that, in Expression (4), x, y, and $\lambda$ represent an x coordinate, a y coordinate, and a wavelength $\lambda$ of a pixel in the captured image 951 (or a pixel array unit of the spectroscopic measurement device 940), and f(x, y, $\lambda$) represents a pixel value of a pixel (x, y, $\lambda$) in the captured image 951.

$$g = \mathrm{H}f\left(x, y, \lambda\right) \tag{4}$$

A solution of Equation (4) can be obtained, for example, by performing optimization using an expectation maximization (EM) algorithm using Equation (5) below (S902). Accordingly, a data cube (g) 952 in which a horizontal plane is an XY coordinate system and a vertical direction is a wavelength axis can be obtained. Note that, a graph 953 illustrates a wavelength spectrum of a (x, y) pixel in a data cube 952.

$$\hat{f}^{(k+1)} = \frac{\hat{f}^{(k)}}{\sum_{m=1}^{M} H_{mn}} \left( \mathrm{H}^{T} \frac{g}{\mathrm{H}\hat{f}^{(k)}} \right) \tag{5}$$

In the spectroscopic measurement device to which such a snapshot type is applied, a trade-off relationship occurs between the spatial resolution and the wavelength resolution due to a limitation on a size of the image sensor that acquires the diffraction image. For example, in a case where a dispersion angle is increased to increase spread of the dispersed light in order to increase the wavelength resolution, since spread of the diffraction image is also increased, it is not possible to perform imaging in a wide range, and the spatial resolution is decreased. On the other hand, in a case where the dispersion angle is decreased in order to increase the spatial resolution, the superimposing of the diffraction images having different wavelengths becomes large, and thus the wavelength resolution is decreased. Moreover, an increase in the wavelength range of the dispersed light incident on one pixel of the image sensor due to a decrease in size of the diffraction image also causes a decrease in the wavelength resolution.

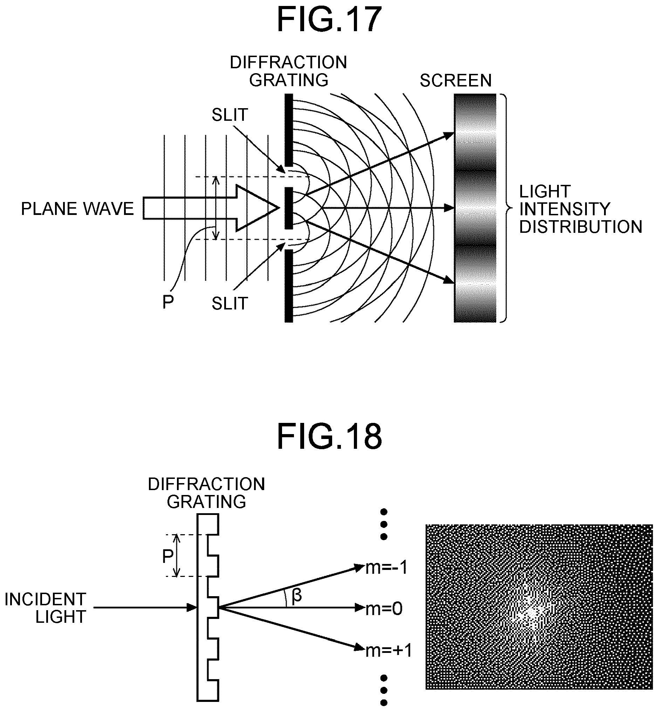

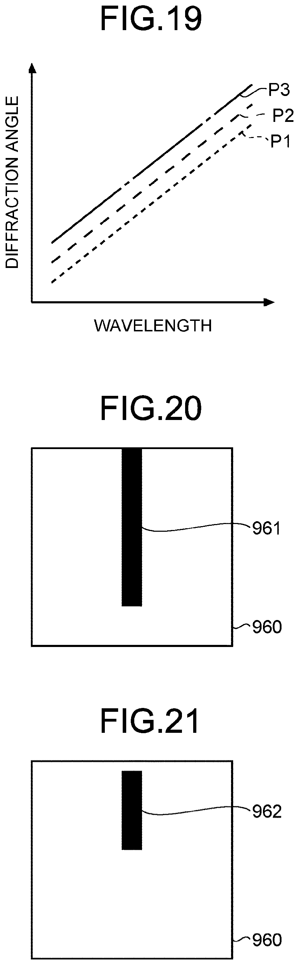

This will be described more specifically. FIG. 17 is a diagram illustrating a principle of spectral diffraction by a slit-type diffraction grating. FIG. 18 is a diagram illustrating an example of an image of light spectrally diffracted by a grating type diffraction grating. FIG. 19 is a diagram illustrating a relationship between a wavelength of incident light and a diffraction angle.

As illustrated in FIG. 17, light (plane wave) incident on the diffraction grating passes through two slits and reaches the screen as a spherical wave. At this time, there is a difference in an optical path length between the light passing through one slit and the light passing through the other slit. Therefore, in the image of the incident light transferred to the screen, light gradation (intensity of light) having a pattern depending on the difference in the optical path length, and an interval (grating interval P) between the wavelength $\lambda$ of the incident light and the slit is generated.

When this is applied to the lattice-shaped diffraction grating, as illustrated in a left side of FIG. 18, light incident on the diffraction grating is diffracted at a different diffraction angle $\beta$ obtained by Equation (3) described above depending on the wavelength $\lambda$ and the grating interval P of the diffraction grating. Note that, in Equation (3), m is order. As a result, as illustrated in a right side of FIG. 18, the image (diffraction image) of the light passing through the diffraction grating is an image in which $\pm$ one order light, $\pm$ two order light,... are arranged around the zero order light as the center.

This means that in a case where the grating interval P is fixed, a relationship between the wavelength λ and the diffraction angle β is a linear relationship as illustrated in FIG. 19. Note that, in FIG. 19, straight lines P1, P2, and P3 correspond to grating intervals P1, P2, and P3, and the grating intervals P1, P2, and P3 have a relationship of P1 < P2 < P3.

From such a relationship, when the grating interval P is decreased, the diffraction angle β increases. Accordingly, as illustrated in FIG. 20, since the spread of a diffraction image 961 in a captured image 960 increases, the wavelength resolution can be increased. On the other hand, when the grating interval P is increased, the diffraction angle β is decreased. Accordingly, as illustrated in FIG. 21, since the spread of a diffraction image 962 in the captured image 960 decreases, the imaging can be performed in a wider range, and the spatial resolution can be increased.

However, in a method for adjusting the wavelength resolution and the spatial resolution by simply controlling the grating interval, the following problems occur.

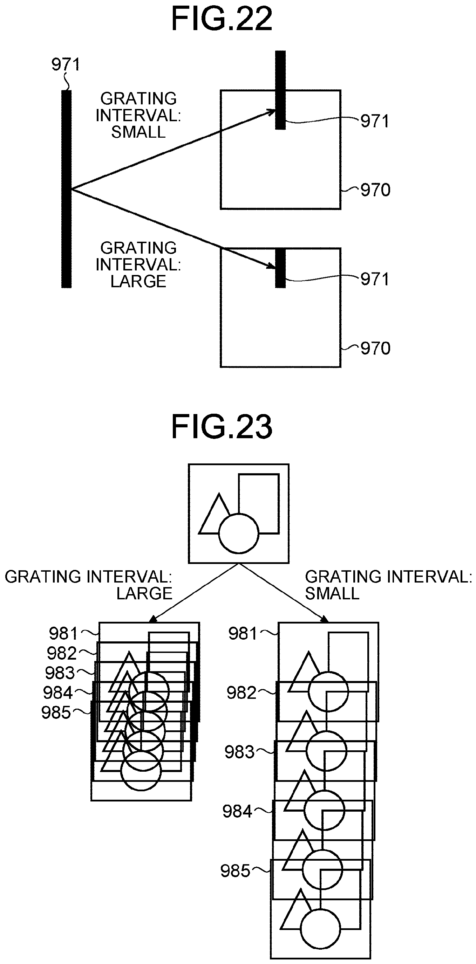

FIG. 22 is a diagram illustrating a first problem. As illustrated in FIG. 22, when the grating interval P is decreased, the diffraction angle β increases at all the observed wavelengths. Therefore, although the range of the diffraction image 971 is widened, depending on setting of the sensor size or the like of the area sensor, an event easily occurs in which a diffraction image 971 protrudes from an observable range 970 of the area sensor and accurate measurement cannot be performed. This means that the wavelength range and the wavelength resolution to be measured are in a trade-off relationship with each other.

Furthermore, FIG. 23 is a diagram illustrating a second problem. As illustrated in FIG. 23, when the grating interval P is increased, the spread of the entire diffraction image is decreased, so that the spatial resolution can be increased. On the other hand, since the superimposing portion of the diffraction images 981 to 985 of each wavelength is increased, the wavelength resolution is decreased. This means that the spatial resolution and the wavelength resolution are in a trade-off relationship with each other. Note that, in FIG. 23, the diffraction images 981 to 985 are slightly shifted in a lateral direction for understanding, but may be aligned in a longitudinal direction in practice.

As described above, in the snapshot type spectroscopic measurement device using the diffraction grating of the related art, since the spatial resolution and the wavelength resolution are in a trade-off relationship, it is difficult to achieve the high wavelength resolution while maintaining the spatial resolution.

In the following embodiment, by proposing a new diffraction element, it is possible to effectively utilize an element of a sensor, which has not been used for measurement as the diffraction element so far, and thus decrease the trade-off relationship between an observable wavelength range and the spatial resolution.

## 3. First Embodiment

Next, a diffraction element and an imaging device according to a first embodiment will be described in detail with reference to the drawings. Note that, the first embodiment is based on the snapshot type spectroscopic measurement device using the diffraction grating described above with reference to FIGS. 13, 14, and 16. However, the present disclosure is not limited to this, and the embodiment can be applied to various optical devices using the diffraction grating as the spectroscopic element.

### 3.1 Outline of Diffraction Grating

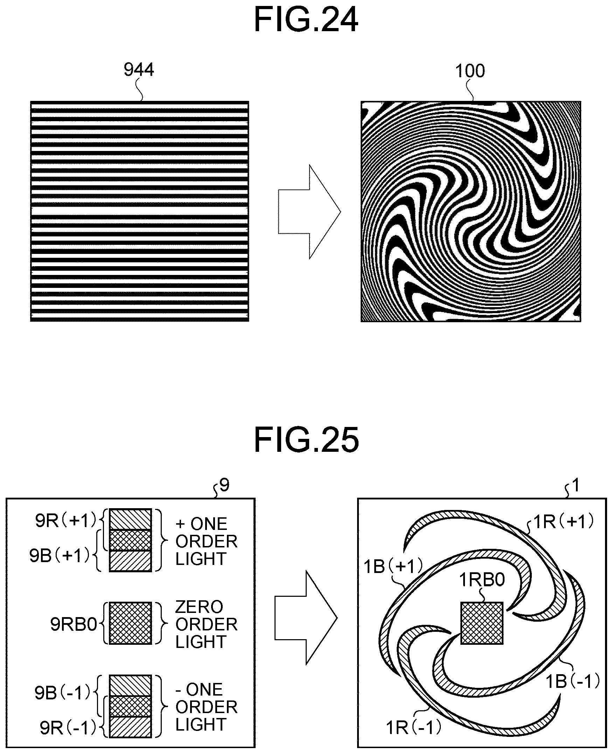

FIG. 24 is a top view illustrating an example of a basic diffraction grating and the diffraction grating according to the first embodiment. FIG. 25 is a diagram illustrating an example of each of image data captured by using the diffraction grating illustrated in the left side of FIG. 24 and image data captured by using the diffraction grating according to the first embodiment, which is illustrated in the right side of FIG. 24. Note that, in the present description, a diffraction grating in which grating patterns are arranged in a uniaxial direction (vertical direction in the drawing) will be described as an example of the diffraction grating 944 of the related art. The grating pattern may be a pattern of a convex portion and a concave portion or an opening pattern in the diffraction grating.

In the first embodiment, for example, as illustrated in FIG. 24, in the related art, the diffraction grating 944 that has been used as the diffraction grating type spectroscopic element (see FIG. 13) in the snapshot type spectroscopic measurement device is replaced with a diffraction grating 100 including a grating pattern generated by converting the grating pattern of the diffraction grating 944 into a polar coordinate system.

In the diffraction grating 944 of the related art as illustrated in the left side of FIG. 24, as illustrated in a left side of FIG. 25, diffraction images 9R(+1), 9B(+1), 9R(-1), and 9B(-1) of ± one order light are rectangular images similarly to a diffraction image 9RB0 of zero order light. Therefore, diffraction images having different wavelengths in each order are superimposed on each other, and the wavelength resolution is decreased.

On the other hand, when the grating pattern of the diffraction grating 100 is a grating pattern of a polar coordinate system as in the embodiment, at least one of the grating interval and the arrangement direction (also referred to as a grating angle) of the grating pattern can be changed according to a position on the surface on which the grating pattern is provided.

The grating pattern may be, for example, an uneven pattern in which a plurality of the convex portions and a plurality of the concave portions are arranged, or an opening pattern in which a plurality of openings are arranged. Furthermore, the grating interval may be an interval between the adjacent convex portions or the adjacent concave portions, or a width or a diameter of an opening. Moreover, the arrangement direction may be an arrangement direction of the convex portions and the concave portions or an arrangement direction of the openings.

With such a configuration, in the diffraction grating 944 of the related art, as illustrated in the left side of FIG. 25, the diffraction images 9RB0, 9R(+1), 9B(+1), 9R(-1), and 9B(-1) that appears so as to be arranged in a direction according to the arrangement direction (vertical direction in the drawing) of the grating pattern can be converted into elongated diffraction images 1RB0, 1R(+1), 1B(+1), 1R(-1), and 1B(-1) that spirally swirl around the center of the image corresponding to the center of the diffraction grating 100 as illustrated in a right side of FIG. 25.

Note that, in the description of FIG. 25, light including a red component (R) and a blue component (B) is used as incident light. Furthermore, in FIG. 25, the diffraction images 9RB0 and 1RB0 indicate diffraction images of zero order light of R and B, the diffraction images 9R(+1) and 1R(+1) indicate diffraction images of + one order light of R, the diffraction images 9B(+1) and 1B(+1) indicate diffraction images of + one order light of B, the diffraction images 9R(-1) and 1R(-1) indicate diffraction images of - one order light of R, and the diffraction images 9B(-1) and 1B(-1) indicate diffraction images of - one order light of B.

As described above, by forming the diffraction images 1R(+1), 1B(+1), 1R (-1), and 1B(-1) of orders of $\pm$ one order light or more into swirling diffraction images, the diffraction images 1R(+1), 1B(+1), 1R(-1), and 1B(-1) can be incident in a region on the light receiving surface of the area sensor 946, for example, in a region that is not used in the diffraction grating 944 of the related art as illustrated in the left side of FIG. 24.

Accordingly, since it is possible to reduce or eliminate the superimposition of the diffraction images having different wavelengths, it is possible to increase the wavelength resolution.

Furthermore, even when the grating interval is decreased, the diffraction image spreads in a rotational direction instead of a uniaxial direction, and protrusion of the diffraction image from the light receiving surface is decreased, so that the grating interval can be decreased so as to further increase the spatial resolution.

As described above, in the embodiment, by using the grating pattern of the diffraction grating 100 as the grating pattern of the polar coordinate system, it is possible to simultaneously improve both the wavelength resolution and the spatial resolution by more efficiently using the imaging region of the image sensor.

3.2 Design of Diffraction Grating

Next, a method for designing the diffraction grating 100 according to the embodiment will be described below. Note that, in the following description, a specific example of the design of the diffraction grating 100 illustrated in the right side of FIG. 24 from the diffraction grating 944 illustrated in the left side of FIG. 24 will be described, but the present disclosure is not limited to this, and it is possible to design a diffraction work of the polar coordinate system according to the embodiment based on various diffraction gratings.

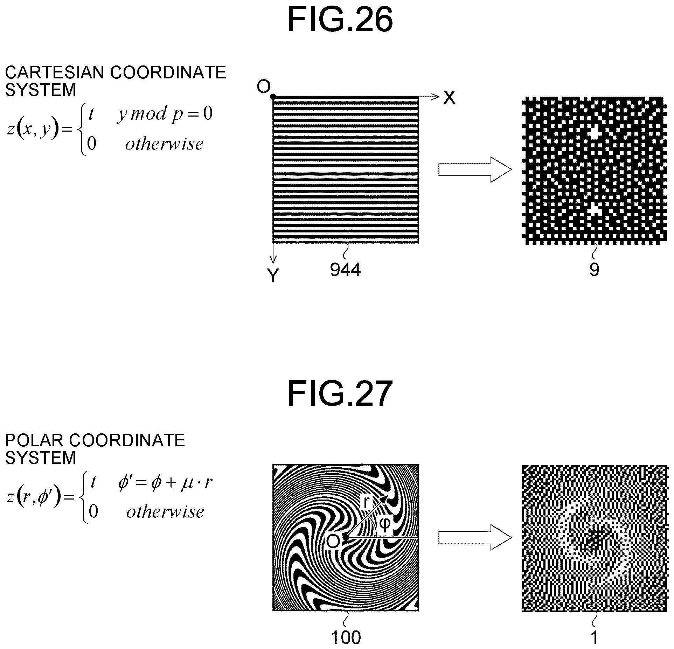

FIG. 26 is a diagram illustrating a method for designing the diffraction grating illustrated in the left side of FIG. 24. FIG. 27 is a diagram illustrating a method for designing the diffraction grating according to the first embodiment. Note that, in the following description, a height of the convex portion from a bottom surface of the concave portion is z.

In the design of the diffraction grating 944 in which the concave portion and the convex portion are alternately arranged in a Y direction as illustrated in the left side of FIG. 24, as illustrated in FIG. 26, for example, an orthogonal coordinate system (also referred to as an XY coordinate system or a Cartesian coordinate system) with an upper left of the diffraction grating 944 as an origin O is adopted, and the diffraction grating 944 is designed by performing calculation expressed in Equation (6) below with respect to one or a plurality of directions in this coordinate system.

$$z(x,y) = \begin{cases} t & y \bmod p = 0 \\ 0 & otherwise \end{cases} \qquad (6)$$

Note that, in Equation (6), p is a grating interval, and t is a height of a convex portion (also referred to as a lattice).

On the other hand, in the first embodiment, as illustrated in FIG. 27, the polar coordinate system is used in which a center of the diffraction grating 100 is set to the origin O, a distance from the origin O is set to r, and a rotation angle from a horizontal direction is set to $\phi$. Then, the diffraction grating 100 is designed by performing calculation expressed in Equation (7) below in the polar coordinate system.

$$z(r,\phi') = \begin{cases} t & \phi' = \phi + \mu \cdot r \\ 0 & otherwise \end{cases} \qquad (7)$$

Note that, in Equation (7), $\mu$ is a parameter for controlling the rotation angle of the grating pattern.

With such a design, the diffraction grating 944 of the Cartesian coordinate system illustrated in the left side of FIG. 24 can be converted into the diffraction grating 100 of the polar coordinate system illustrated in the right side of FIG. 24. Accordingly, image data 9 (corresponding to the left side of FIG. 25) of the diffraction image as illustrated in a right side of FIG. 26 can be converted into image data 1 (corresponding to the right side of FIG. 25) of the diffraction image as illustrated in a right side of FIG. 27.

3.3 More Specific Design Procedure

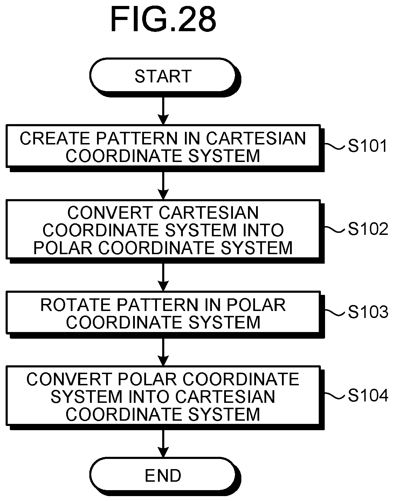

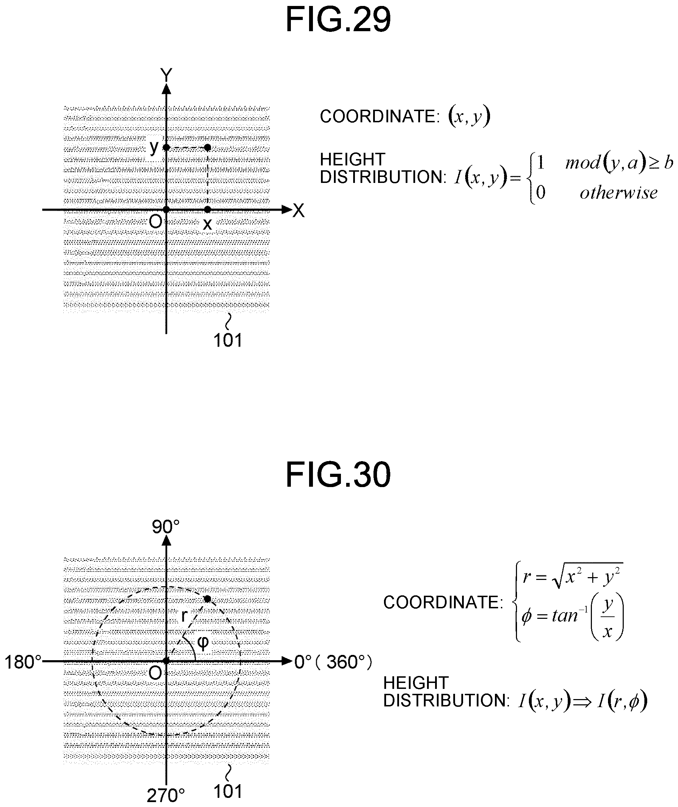

A more specific design procedure of the diffraction grating according to the embodiment will be described below. FIG. 28 is a flowchart illustrating a design procedure of the diffraction grating according to the first embodiment. FIGS. 29 to 32 are diagrams illustrating a specific example of each procedure illustrated in FIG. 28.

As illustrated in FIG. 28, in the design of the diffraction grating 100, first, a diffraction grating 101 (for example, corresponding to the diffraction grating 944) is designed in the Cartesian coordinate system (Step S101). More specifically, as illustrated in FIG. 29, the diffraction grating 101 is designed by using the Cartesian coordinate system by a method similar to the designing method described with reference to FIG. 26. However, in the description, the center of the diffraction grating is the origin O. Furthermore, in the description, a height I (x, y) (corresponding to a height z (x, y)) of the grating pattern at a position of each Cartesian coordinate (x, y) is expressed in Equation (8) below. Note that, in Equation (8), a and b are constants.

$$I(x,y) = \begin{cases} 1 & mod(y,a) \geq b \\ 0 & otherwise \end{cases} \qquad (8)$$

Next, the Cartesian coordinate system is converted into the polar coordinate system by applying the polar coordinate system to the diffraction grating 101 designed in FIG. 29 (Step S102). Specifically, as illustrated in FIG. 30, the polar coordinate system is applied to the diffraction grating 101 designed in FIG. 29, and a height I (r, $\phi$) (= I (x, y)) of the grating pattern at each polar coordinate (r, $\phi$) is obtained. Note that, the polar coordinate corresponding to a Cartesian coordinate (x, y) can be obtained by Equation (9) below.

$$\begin{cases} r = \sqrt{x^2 + y^2} \\ \phi = tan^{-1}\left(\dfrac{y}{x}\right) \end{cases} \qquad (9)$$

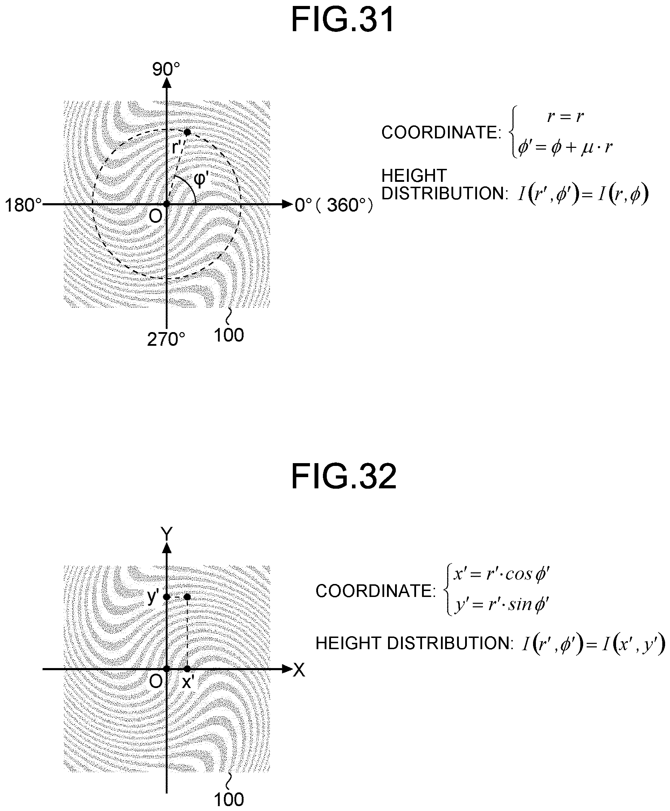

Next, the diffraction grating 101 according to the first embodiment is designed by rotating the diffraction grating 101 in the polar coordinate system (Step S103). Specifically, as illustrated in FIG. 31, the diffraction grating 100 according to the first embodiment is designed by rotating the diffraction grating 101 designed in FIG. 29 by a predetermined angle $\mu \cdot r$ in the polar coordinate system. Note that, $\mu$ may be a constant. A polar coordinate after the rotation is expressed in Equation (10) below.

$$\begin{cases} r = r \\ \phi' = \phi + \mu \cdot r \end{cases} \qquad (10)$$

Furthermore, the height of the grating pattern at each polar coordinate after the rotation is expressed in Equation (11) below.

$$I(r', \phi') = I(r, \phi) \qquad (11)$$

Finally, the polar coordinate system is converted into the Cartesian coordinate system by applying the Cartesian coordinate system to the diffraction grating 100 after the rotation (Step S104). Specifically, as illustrated in FIG. 32, the Cartesian coordinate system is applied to the diffraction grating 100 after the rotation, and a height I (x', y') (= I (r', $\phi$') of the grating pattern at each Cartesian coordinate (x', y') is obtained. Note that, the Cartesian coordinate (x', y') corresponding to a polar coordinate (r', $\phi$') can be obtained by Equation (12) below.

$$\begin{cases} x' = r' \cdot cos\, \phi' \\ y' = r' \cdot sin\, \phi' \end{cases} \qquad (12)$$

3.4 Relationship between Diffraction Grating and Diffraction Image

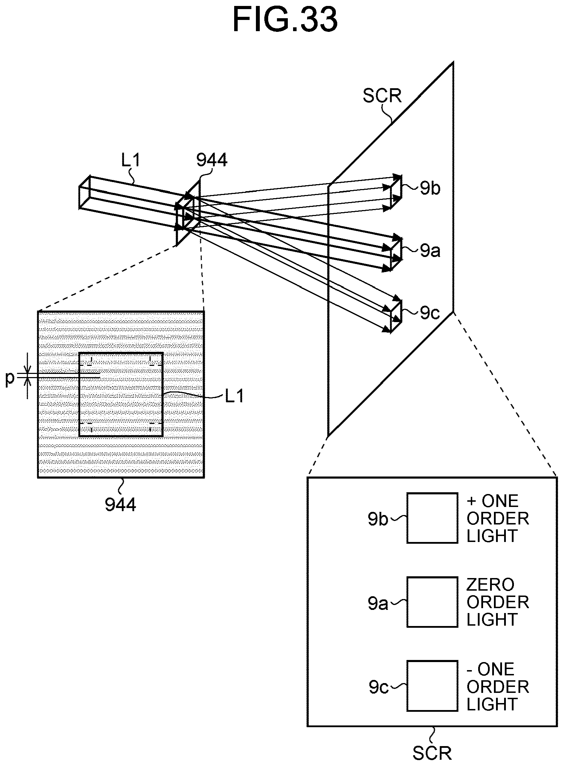

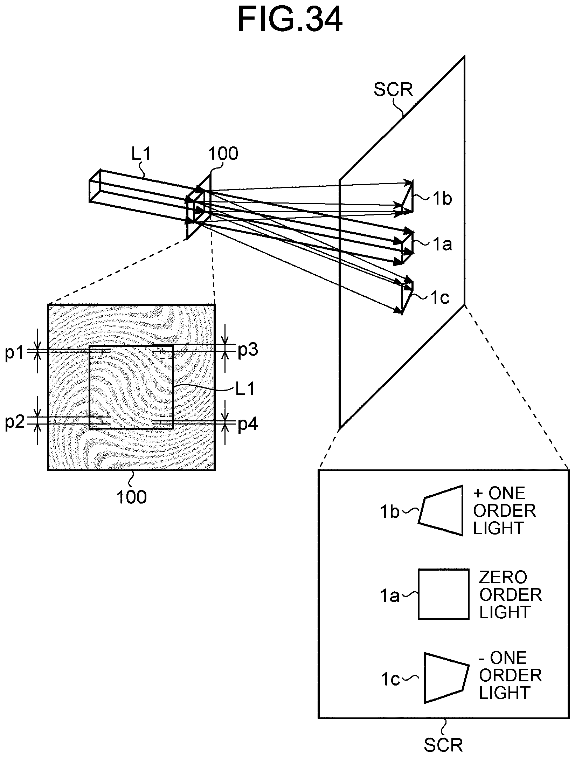

Next, a relationship between the diffraction grating and the diffraction image will be described. FIG. 33 is a diagram illustrating a relationship between the diffraction grating illustrated in the left side of FIG. 24 and the diffraction image. FIG. 34 is a diagram illustrating a relationship between the diffraction grating according to the first embodiment and the diffraction image. Note that, FIGS. 33 and 34 illustrate a case where a beam cross section is square and monochromatic light is used as incident light L1.

As illustrated in FIG. 33, in the diffraction grating 944 illustrated in the left side of FIG. 24, the grating interval p and the arrangement direction (gap length direction) of the grating pattern are constant with respect to an incident position of the incident light L1 with respect to the diffraction grating 944. Therefore, diffraction images 9a to 9c projected on a screen SCR at a certain distance from the diffraction grating 944 are rectangular regions reflecting the beam cross section of the incident light L1 as it is.

On the other hand, as illustrated in FIG. 34, in the diffraction grating 100 according to the first embodiment, the grating intervals p1 to p4 and the arrangement direction (gap length direction) of the grating pattern change depending on the incident position of the incident light L1 with respect to the diffraction grating 944. Therefore, diffraction images 1a to 1c projected on the screen SCR at a certain distance from the diffraction grating 100 are regions of which shapes are distorted depending on the grating interval p of the diffraction grating 100 and the arrangement direction of the grating pattern.

3.5 Simulation Result

Next, the restoration result of the wavelength spectrum obtained by performing simulation on the snapshot type spectroscopic measurement device using the diffraction grating according to the embodiment will be described.

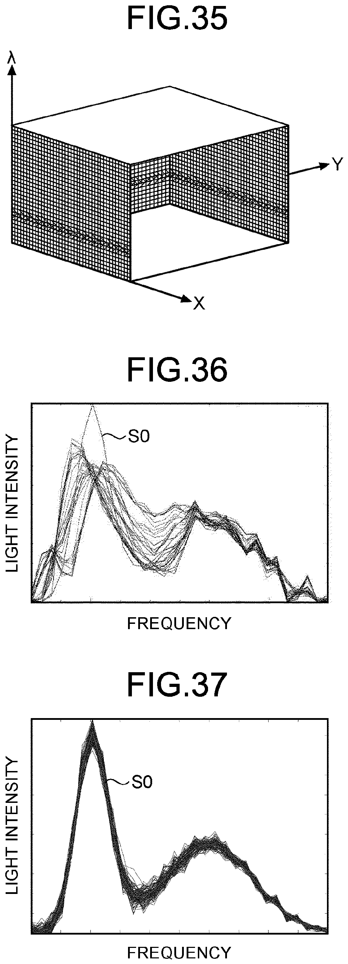

FIG. 35 is a diagram illustrating a data cube (hereinafter, referred to as an input data cube) of light used as the incident light in the simulation. FIG. 36 is a diagram illustrating the restoration result of the wavelength spectrum in a case where the diffraction grating illustrated in the left side of FIG. 24 is used. FIG. 37 is a diagram illustrating the restoration result of the wavelength spectrum in a case where the diffraction grating according to the first embodiment is used.

As illustrated in FIG. 35, in the simulation, light of a single wavelength having a spatial spread in the XY direction is used as the incident light for simplicity. Furthermore, in FIGS. 36 and 37, a spectrum S0 indicates a spectrum of the incident light, that is, a true value of the input data cube.

As illustrated in FIG. 36, in a case where the diffraction grating 944 illustrated in the left side of FIG. 24 is used, the restored wavelength spectrum greatly deviates from the spectrum S0 of the true value. Note that, in the simulation, root mean squared error (RMSE) was 2.9 and mean absolute error (MAE) was 1.9 in the result illustrated in FIG. 36.

On the other hand, as illustrated in FIG. 37, in a case where the diffraction grating 100 according to the first embodiment is used, the restored wavelength spectrum substantially coincides with the spectrum S0 of the true value. Note that, in the simulation, root mean squared error (RMSE) was 0.55 and mean absolute error (MAE) was 0.4 in the result illustrated in FIG. 37.

As described above, by using the diffraction grating according to the first embodiment, the restoration performance of the wavelength spectrum can be significantly improved. This indicates that the wavelength resolution can be significantly improved by using the diffraction grating according to the first embodiment.

3.6 Action and Effect

As described above, according to the embodiment, since the diffraction image can be an elongated diffraction image spirally swirling, the superimposition of the diffraction images having different wavelengths can be decreased or eliminated, and the wavelength resolution can be increased. Furthermore, even when the grating interval is decreased, the diffraction image spreads in a rotational direction instead of a uniaxial direction, and protrusion of the diffraction image from the light receiving surface is decreased, so that the grating interval can be decreased so as to further increase the spatial resolution. Accordingly, it is possible to simultaneously improve both the wavelength resolution and the spatial resolution by using the imaging region of the image sensor more efficiently.

4. Second Embodiment

In the first embodiment described above, a case has been described in which the diffraction grating serving as a base for generating the diffraction grating 100 is the diffraction grating 944 in which the grating patterns are arranged in a uniaxial direction as illustrated in the left side of FIG. 24. However, as described above, the diffraction grating as the base is not limited to the diffraction grating 944. Accordingly, in the second embodiment, variations of the diffraction grating 100 described in the first embodiment will be described with some examples.

4.1 First Variation

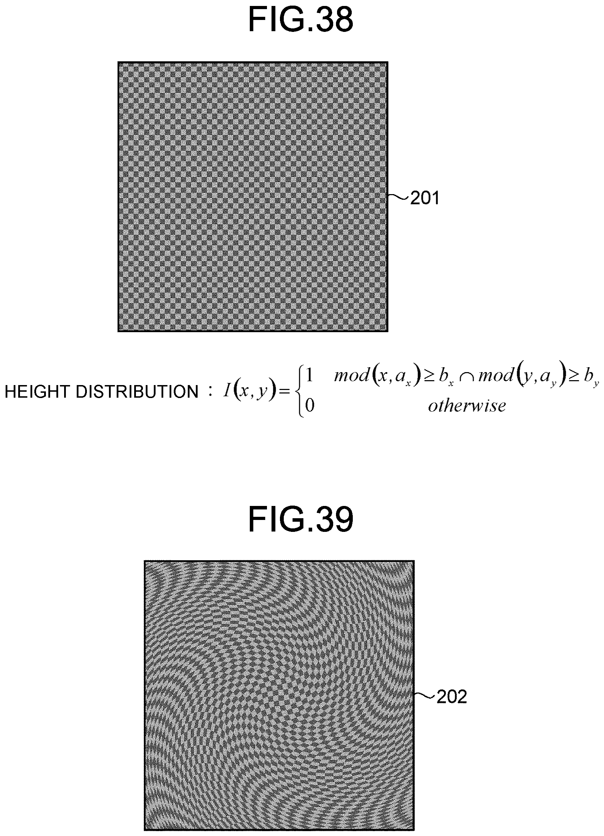

FIG. 38 is a plan view illustrating an example (example of CHECKER pattern) of a diffraction grating as a base. FIG. 39 is a plan view illustrating a diffraction grating according to a first variation example of the second embodiment, which is generated based on the diffraction grating illustrated in FIG. 38.
As illustrated in FIG. 38, the diffraction grating generated in the procedure described using Step S101 of FIG. 28 in the first embodiment may be a diffraction grating 201 of a so-called CHECKER pattern in which the convex portions are arranged in a grating shape. In this case, in the description using FIG. 29, the height I (x, y) of the grating pattern at a position of each Cartesian coordinate (x, y) is expressed in Equation (13) below. Note that, in Equation (13), a and b are constants.

$$I(x,y)=\begin{cases} 1 & mod(x,a_x)\geq b_x \cap mod(y,a_y)\geq b_y \\ 0 & otherwise \end{cases} \tag{13}$$

In a case where the procedures of Steps S102 to S104 in FIG. 28 are executed for the diffraction grating 201 of the CHECKER pattern generated in this manner, it is possible to design a diffraction grating 202 in which the convex portions are rotated in an XY plane direction around the entire center as illustrated in FIG. 39.

4.2 Second variation

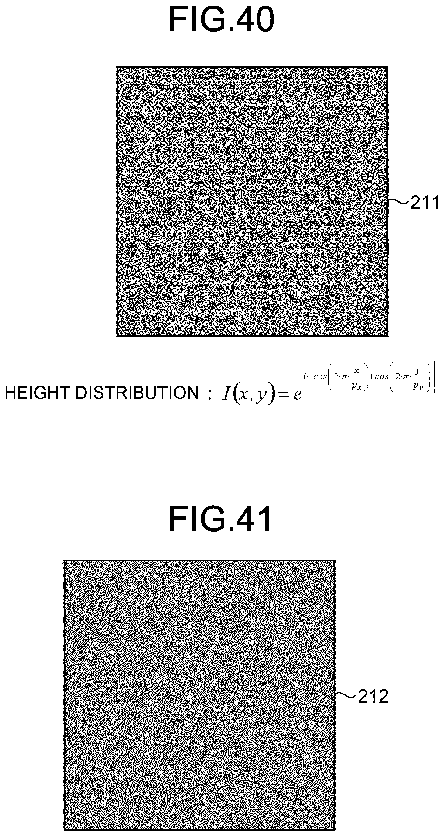

FIG. 40 is a plan view illustrating another example (example of COSINE pattern) of the diffraction grating as a base. FIG. 41 is a plan view illustrating a diffraction grating according to the second variation example of the second embodiment, which is generated based on the diffraction grating illustrated in FIG. 40.
As illustrated in FIG. 40, the diffraction grating generated in the procedure described using Step S101 of FIG. 28 in the first embodiment may be a diffraction grating 211 of a so-called COSINE pattern in which the convex portions, of which distal ends are rounded, are arranged in a grating shape. In this case, in the description using FIG. 29, the height I (x, y) of the grating pattern at a position of each Cartesian coordinate (x, y) is expressed in Equation (14) below. Note that, in Equation (14), a and b are constants.

$$I(x,y)=e^{i\cdot\left[cos\left(2\cdot\pi\cdot\frac{x}{p_x}\right)+cos\left(2\cdot\pi\cdot\frac{y}{p_y}\right)\right]} \tag{14}$$

In a case where the procedures of Steps S102 to S104 in FIG. 28 are executed for the diffraction grating 211 of the COSINE pattern generated in this manner, it is possible to design a diffraction grating 212 in which the convex portions, of which the distal ends are rounded, is rotated in the XY plane direction around the entire center as illustrated in FIG. 41.
As described above, the diffraction grating serving as the base can be variously deformed, and by deforming the diffraction grating serving as the base, it is possible to create various diffraction gratings according to a purpose.

Since other configurations, operations, and effects may be similar to those of the above-described embodiment, a detailed description thereof will be omitted here.

Although the embodiments of the present disclosure have been described above, the technical scope of the present disclosure is not limited to the above-described embodiments as it is, and various modifications can be made without departing from the gist of the present disclosure. Furthermore, constituent elements of different embodiments and modified examples may be appropriately combined.

Furthermore, the effect of each of the embodiments described in the present specification is merely an example and is not limited, and other effects may be obtained.

Moreover, each of the above-described embodiments may be used alone, or may be used in combination with other embodiments.

Note that, the present technique can also have the following configurations.

(1) A diffraction element comprising a grating pattern,
wherein according to a position of light input to the diffraction element, the position being from a center of the diffraction element, an image forming position of diffracted light corresponding to the position of each wavelength is adjusted by adjusting a shape of the grating pattern at the position.
(2) The diffraction element according to (1), wherein the grating pattern includes a grating interval and a grating angle.
(3) The diffraction element according to (2), wherein the grating pattern is an uneven pattern in which a plurality of convex portions and a plurality of concave portions are arranged, or an opening pattern in which a plurality of openings are arranged.
(4) The diffraction element according to (3), wherein the grating interval is an interval between the convex portions adjacent to each other or the concave portions adjacent to each other, or a width or a diameter of the openings.
(5) The diffraction element according to (3) or (4), wherein the grating angle is an arrangement direction of the convex portions and the concave portions or an arrangement direction of the openings.
(6) The diffraction element according to any one of (1) to (5), wherein the grating pattern includes a spiral shape.
(7) The diffraction element according to any one of (1) to (6), wherein the grating pattern is a grating pattern designed by rotating a grating pattern designed in a Cartesian coordinate system in a polar coordinate system.
(8) The diffraction element according to (7), wherein the grating pattern is a grating pattern generated by rotating, in the polar coordinate system, a grating pattern in which convex portions and concave portions, or openings are arranged in one direction.
(9) The diffraction element according to (7), wherein the grating pattern is a grating pattern generated by rotating, in the polar coordinate system, a grating pattern in which convex portions are arranged in a grating shape.
(10) The diffraction element according to (9), wherein distal ends of the convex portions are rounded.
(11) An imaging device comprising:

a diffraction element including a grating pattern; and
a solid-state imaging device in which the diffraction element is disposed on a light receiving surface side;
wherein according to a position of light input to the diffraction element, the position being from a center of the diffraction element, the diffraction element adjusts an image forming position of diffracted light corresponding to the position of each wavelength by adjusting a shape of the grating pattern at the position.

Reference Signs List

100, 101, 201, 202, 211, 212, 902 DIFFRACTION GRATING
900 MEASUREMENT OBJECT
901, 913 PRISM
911 LIGHT SOURCE
912, 932, 942 SLIT
914 LINEAR SENSOR
921 WAVELENGTH FILTER ARRAY
922, 947 OPTICAL FILTER
923, 936, 946 AREA SENSOR
931, 941 OBJECT LENS
933, 943 COLLIMATING LENS
934 SPECTROSCOPIC ELEMENT

944 DIFFRACTION GRATING TYPE SPECTROSCOPIC ELEMENT (DIFFRACTION GRATING)
935, 945 IMAGE FORMING LENS

**Claims**

1. A diffraction element comprising a grating pattern,
   wherein according to a position of light input to the diffraction element, the position being from a center of the diffraction element, an image forming position of diffracted light corresponding to the position of each wavelength is adjusted by adjusting a shape of the grating pattern at the position.

2. The diffraction element according to claim 1, wherein the grating pattern includes a grating interval and a grating angle.

3. The diffraction element according to claim 2, wherein the grating pattern is an uneven pattern in which a plurality of convex portions and a plurality of concave portions are arranged, or an opening pattern in which a plurality of openings are arranged.

4. The diffraction element according to claim 3, wherein the grating interval is an interval between the convex portions adjacent to each other or the concave portions adjacent to each other, or a width or a diameter of the openings.

5. The diffraction element according to claim 3, wherein the grating angle is an arrangement direction of the convex portions and the concave portions or an arrangement direction of the openings.

6. The diffraction element according to claim 1, wherein the grating pattern includes a spiral shape.

7. The diffraction element according to claim 1, wherein the grating pattern is a grating pattern designed by rotating a grating pattern designed in a Cartesian coordinate system in a polar coordinate system.

8. The diffraction element according to claim 7, wherein the grating pattern is a grating pattern generated by rotating, in the polar coordinate system, a grating pattern in which convex portions and concave portions, or openings are arranged in one direction.

9. The diffraction element according to claim 7, wherein the grating pattern is a grating pattern generated by rotating, in the polar coordinate system, a grating pattern in which convex portions are arranged in a grating shape.

10. The diffraction element according to claim 9, wherein distal ends of the convex portions are rounded.

11. An imaging device comprising:

    a diffraction element including a grating pattern; and
    a solid-state imaging device in which the diffraction element is disposed on a light receiving surface side;
    wherein according to a position of light input to the diffraction element, the position being from a center of the diffraction element, the diffraction element adjusts an image forming position of diffracted light corresponding to the position of each wavelength by adjusting a shape of the grating pattern at the position.

# FIG.1

| RADIO WAVE | MICROWAVE | INFRARED LIGHT | VISIBLE LIGHT | ULTRAVIOLET LIGHT | X-RAY | GAMMA-RAY |
|---|---|---|---|---|---|---|

$10^3$　　　　$1$　　　　$10^{-3}$　　$10^{-5}$　　$10^{-7}$　　$10^{-9}$　　$10^{-11}$　　$10^{-13}$

# FIG.2

650　　600　　550　　500　　450　　400

SUNLIGHT

ELECTRIC LAMP

NEON LAMP

HYDROGEN LAMP

MERCURY LAMP

SODIUM LAMP

# FIG.3

# FIG.4

# FIG.5

902

INCIDENT
LIGHT

α

d

β

EMITTED
LIGHT

# FIG.6

λ

DATA CUBE

D

X

Y

# FIG.7

# FIG.8

# FIG.9

# FIG.10

SCANNING
DIRECTION

# FIG.11

# FIG.12

# FIG.13

900 941 942 943 944 945 946

# FIG.14

λ

D

X

Y

# FIG.15

947    946

# FIG.16

900

940

~S901

951

S902

952

(x,y)

$\lambda$ [nm]
700
600
500
400

Y [PIXEL]
0
20
40
60

X [PIXEL]
0
20
40
60

953

RELATIVE INTENSITY
1
0.8
0.6
0.4
0.2
0

WAVELENGTH [nm]
400    500    600    700

# FIG.17

DIFFRACTION
GRATING

SCREEN

SLIT

PLANE WAVE

LIGHT
INTENSITY
DISTRIBUTION

P    SLIT

# FIG.18

DIFFRACTION
GRATING

P

INCIDENT
LIGHT

$\beta$

m=-1

m=0

m=+1

# FIG.19

# FIG.20

# FIG.21

# FIG.22

971

GRATING
INTERVAL:
SMALL

971

970

GRATING
INTERVAL:
LARGE

971

970

# FIG.23

GRATING INTERVAL:
LARGE

GRATING INTERVAL:
SMALL

981
982
983
984
985

981

982

983

984

985

# FIG.24

# FIG.25

# FIG.26

CARTESIAN COORDINATE
SYSTEM

$$z(x, y) = \begin{cases} t & y \bmod p = 0 \\ 0 & \text{otherwise} \end{cases}$$

944

9

# FIG.27

POLAR COORDINATE
SYSTEM

$$z(r, \phi') = \begin{cases} t & \phi' = \phi + \mu \cdot r \\ 0 & \text{otherwise} \end{cases}$$

100

1

# FIG.28

START

CREATE PATTERN IN CARTESIAN COORDINATE SYSTEM — S101

CONVERT CARTESIAN COORDINATE SYSTEM INTO POLAR COORDINATE SYSTEM — S102

ROTATE PATTERN IN POLAR COORDINATE SYSTEM — S103

CONVERT POLAR COORDINATE SYSTEM INTO CARTESIAN COORDINATE SYSTEM — S104

END

# FIG.29

COORDINATE: $(x, y)$

HEIGHT
DISTRIBUTION: $I(x, y) = \begin{cases} 1 & mod(y, a) \geq b \\ 0 & otherwise \end{cases}$

101

# FIG.30

COORDINATE: $\begin{cases} r = \sqrt{x^2 + y^2} \\ \phi = tan^{-1}\left(\dfrac{y}{x}\right) \end{cases}$

HEIGHT
DISTRIBUTION: $I(x, y) \Rightarrow I(r, \phi)$

101

31

# FIG.31

COORDINATE: $\begin{cases} r = r \\ \phi' = \phi + \mu \cdot r \end{cases}$

HEIGHT
DISTRIBUTION: $I(r', \phi') = I(r, \phi)$

# FIG.32

COORDINATE: $\begin{cases} x' = r' \cdot \cos \phi' \\ y' = r' \cdot \sin \phi' \end{cases}$

HEIGHT DISTRIBUTION: $I(r', \phi') = I(x', y')$

# FIG.33

L1    944

SCR

9b

9a

9c

p

L1

944

9b    + ONE ORDER LIGHT

9a    ZERO ORDER LIGHT

9c    - ONE ORDER LIGHT

SCR

# FIG.34

# FIG.35

# FIG.36

# FIG.37

# FIG.38

201

HEIGHT DISTRIBUTION : $I(x,y) = \begin{cases} 1 & mod(x,a_x) \geq b_x \cap mod(y,a_y) \geq b_y \\ 0 & otherwise \end{cases}$

# FIG.39

202

# FIG.40

~211

HEIGHT DISTRIBUTION : $I(x,y) = e^{i \cdot \left[ cos\left( 2 \cdot \pi \frac{x}{p_x} \right) + cos\left( 2 \cdot \pi \frac{y}{p_y} \right) \right]}$

# FIG.41

~212

## INTERNATIONAL SEARCH REPORT

| International application No. |
| --- |
| PCT/JP2020/019576 |

### A. CLASSIFICATION OF SUBJECT MATTER
Int.Cl. G02B5/18(2006.01)i, G01J3/18(2006.01)i
FI: G02B5/18, G01J3/18
According to International Patent Classification (IPC) or to both national classification and IPC

### B. FIELDS SEARCHED
Minimum documentation searched (classification system followed by classification symbols)
Int.Cl. G02B5/18, G01J3/18

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 11-326860 A (OLYMPUS OPTICAL CO., LTD.) 26.11.1999 (1999-11-26), paragraphs [0014], [0018]-[0021], [0042], fig. 2-5 | 1-5, 7-9<br>6, 10-11 |
| Y | WO 2013/046257 A1 (HITACHI, LTD.) 04.04.2013 (2013-04-04), paragraph [0042], fig. 3-21 | 6 |
| Y | JP 2011-224916 A (OJI PAPER CO., LTD.) 10.11.2011 (2011-11-10), paragraph [0026], fig. 1 | 10 |
| Y | JP 2004-077957 A (NALUX CO., LTD.) 11.03.2004 (2004-03-11), paragraph [0031], fig. 4 | 10 |
| Y | JP 2016-090576 A (PANASONIC INTELLECTUAL PROPERTY MANAGEMENT CO., LTD.) 23.05.2016 (2016-05-23), claims, fig. 1 | 11 |
| A | WO 2018/028724 A1 (USTAV PRISTROJOVE TECHNIKY AVCR., V.V.I.) 15.02.2018 (2018-02-15), whole document, all drawings | 1-11 |

☐ Further documents are listed in the continuation of Box C.       ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 09.07.2020 | 21.07.2020 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**
Information on patent family members

International application No.

PCT/JP2020/019576

| | | | |
|---|---|---|---|
| JP 11-326860 A | 26.11.1999 | (Family: none) | |
| WO 2013/046257 A1 | 04.04.2013 | US 2014/0204463 A1 paragraph [0063], fig. 3-21 | |
| JP 2011-224916 A | 10.11.2011 | (Family: none) | |
| JP 2004-077957 A | 11.03.2004 | (Family: none) | |
| JP 2016-090576 A | 23.05.2016 | US 2016/0123810 A1 claims, fig. 1 | |
| WO 2018/028724 A1 | 15.02.2018 | EP 3497491 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016090576 A

**Non-patent literature cited in the description**

- **HABEL, R. ; KUDENOV, M. ; WIMMER, M.** Practical spectral photography. *Computer Graphics Forum (Proceedings EUROGRAPHICS 2012),* 2012, vol. 31 (2), 449-458
- **TEBOW, CHRISTOPHER P. ; DERENIAK, EUSTACE L. ; GARROOD, DENNIS ; DORSCHNER, TERRY A. ; VOLIN, CURTIS E.** Tunable snapshot imaging spectrometer. *Proceedings of the SPIE,* 2004, vol. 5159, 64-72
- **DWIGHT JG ; TKACZYK TS.** Lenslet array tunable snapshot imaging spectrometer (LATIS) for hyperspectral fluorescence microscopy. *Biomed Opt Express,* 2017, vol. 8, 1950-64